# EUROPEAN PATENT APPLICATION

(11) **EP 3 296 947 A1**
(43) Date of publication of application: **21.03.2018**
(21) Application number: 16796449.3
(22) Date of filing: 13.05.2016
(51) Int. Cl.: G06Q 50/06

(54) **POWER STATION SYSTEM AND POWER STATION SYSTEM SERVER**

(30) Priority: 15.05.2015 JP 2015100150
(71) Applicant: Kabushiki Kaisha Toshiba, Minato-ku Tokyo 105-8001 (JP); Toshiba Energy Systems & Solutions Corporation, Saiwai-ku Kawasaki-shi Kanagawa 2120013 (JP)
(72) Inventor: PORNMONTARUT, Puttisin, Tokyo 105-8001 (JP); TAKEDA, Daisuke, Tokyo 105-8001 (JP)
(74) Representative: Awapatent AB
(86) International application number: PCT/JP2016/064382
(87) International publication number: WO 2016/186056

(57) **Abstract**

Provided are a power station system and a server thereof which enable a power consumer to have power generation facilities regardless of an installation space, etc., and which enable the power consumer to self-generate power. A server 4 includes a power-generation-amount calculating unit 42, a trade amount calculating unit 47, a balance calculating unit 44, and an information display control unit 45. The power-generation-amount calculating unit 42 proportionally distributes power generation amount information in accordance with power generation share number information 45b, and adds a distribution value to owned power amount information 41d of each member. The trade amount calculating unit 47 subtracts a power sales amount from the owned power amount information 41d. The balance calculating unit 44 adds a power sales profit based on a change in the owned power amount information 41d to balance information 41e. The information display control unit 45 transmits the owned power amount information 41d of the member and the balance information 41e thereof to a computer terminal 11.

## Description

### FIELD

Embodiments of the present disclosure relate to a power station system which has power generation facilities.

### BACKGROUND

Recently, the power demand is increasing. There are various reasons, such as population growth or industry growth, etc. When power demand is tightened, that is, when power demand is near the power supply upper limit, the stabilization of the system is disturbed, and faults such as blackout may occur.

In order to cope with the increase in power demand, an improvement of the power supply capability by thermal power generation or renewable energy is one idea. However, since thermal power generation consumes fossil fuels, it may not be a solution for demand increase in view of the fossil fuel depletion and the effects to the global environment in recent years. Example renewable energies are solar light energy or wind energy, etc., but since those have a large variability in power generation capability with respect to weather, they are not likely to be a stable base-load power supply at present time, and may easily break the balance between demand and supply, deteriorating the system stabilization.

Hence, a scheme of adjusting the demand in accordance with the supply capability based on a demand-response by a flexible change in power price has been proposed, and is actually in practice in some cases. When, for example, a demand-supply is tightened, that is, when power demand is near the power supply upper limit due to, for example, an extremely hot day, by setting the power sales price to be a high price, the power consumption is suppressed, and a demand curve is shifted.

In addition, a private-power-generation and a self-power-consumption may be promoted by installing power generation facilities like solar power generation at each home and a building. When the private-power-generation and the self-power-consumption advance, they contribute to a system stabilization.

Still further, a scheme of achieving a time shift between power supply and consumption by installing an energy storage device like secondary batteries, has also been proposed, and is actually in practice in some cases. The energy storage device is charged at a time which power demand is little, is discharged at a time which the power demand reaches a peak. That is, by utilizing the power stored when the power demand is little at the time the power demand is large, the power demand is equalized, reducing the peak of power demand and suppressing a necessary number of power generation facilities.

### CITATION LIST

### PATENT LITERATURES

Patent Document 1: US 2011/0208637 A
Patent Document 2: US 2013/0178991 A
Patent Document 3: US 7385373 B

### SUMMARY

According to the demand-response in power business, however, it is known that the price flexibility with respect to demand is low. That is, the reduction of power demand is little in comparison with the increase of power price. For example, at an extremely hot day, it is difficult to lead a power consumer not to turn ON an air conditioner to suppress the power consumption even if the power price is increased. In addition, it is difficult to promote the power consumer to consume power even if the power price is low.

Still further, it is not easy to introduce private-power-generation and self-power-consumption by installing power generation facilities in each home or a building, because there are disadvantages, such as an installation space of power generation facilities, installation costs, and maintenance costs and works. Also in the case of the time shift utilizing the energy storage device, the popularization of the energy storage device is not accelerated because of the installation space, the installation costs, and the maintenance costs and works for the energy storage device in each home or a building, and advantageous effect is substantially not achieved.

Accordingly, an objective of embodiments is to provide a power station system and a server thereof which enable a power consumer to have power generation facilities regardless of an installation space, etc., and which enable the power consumer to self-generate power.

In order to accomplish the above objective, a server according to an embodiment is capable of transmitting data to and receiving data from a power station system including power generation facilities, and computer terminals of a plurality of members, the server including:
a receiving unit receiving power generation amount information of the power generation facilities, and each power consumption amount information of power meters;
a memory unit storing, for each member identification information of each of the members, power generation share number information, owned power generation amount information, and balance information;
a power-generation-amount calculating unit adding a power generation distribution amount obtained by proportionally distributing a value of the power generation amount information in accordance with a value of the power generation share number information to a value of the owned power amount information of each of the members;
a trade amount calculating unit subtracting a power sales amount from the owned power amount information;
a balance calculating unit calculating a power sales profit based on a change in the owned power amount information, and adding the power sales profit to the balance information; and
an information display control unit transmitting the owned power amount information of the member, the power consumption amount information, and the balance information of the member to the computer terminal.

The power generation station may include an energy storage device, the memory unit may further store power storage share number information for each of the member identification information, the power-generation-amount calculating unit may change the owned power amount information with a value obtained by multiplying the power storage share number information by a power storage capacity per a share number being the upper limit, and the balance calculating unit may add the power sales profit that is an excess from the upper limit to the balance information.

In addition, in order to accomplish the above objective, a power station system according to an embodiment is connected to terminals capable of transmitting data to and receiving data from computer terminals of a plurality of members, and includes power generation facilities, and the power station system further includes:
a receiving unit receiving power generation amount information of the power generation facilities, and each power consumption amount information from power meters;
a memory unit storing, for each member identification information of each of the members, power generation share number information, owned power generation amount information, and balance information;
a power-generation-amount calculating unit adding a power generation distribution amount obtained by proportionally distributing a value of the power generation amount information in accordance with a value of the power generation share number information to a value of the owned power amount information of each of the members;
a trade amount calculating unit subtracting a power sales amount from the owned power amount information;
a balance calculating unit calculating a power sales profit based on a change in the owned power amount information, and adding the power sales profit to the balance information; and
an information display control unit transmitting the owned power amount information of the member, the power consumption amount information, and the balance information of the member to the computer terminal.

The power generation station may include an energy storage device, the memory unit may further store power storage share number information for each of the member identification information, the power-generation-amount calculating unit may change the owned power amount information with a value obtained by multiplying the power storage share number information by a power storage capacity per a share number being the upper limit, and the balance calculating unit may add the power sales profit that is an excess from the upper limit to the balance information.

### BRIEF DESCRIPTION OF DRAWINGS

FIG. 1 is a block diagram that illustrates the entire structure of a power station system according to a first embodiment;
FIG. 2 is a block diagram that illustrates the detailed structure of a server according to the first embodiment;
FIG. 3 is an exemplary diagram that illustrates the account information of a system member according to the first embodiment;
FIG. 4 is a flowchart that illustrates an operation of the server according to the first embodiment;
FIG. 5 is an exemplary diagram of a screen displayed on a computer terminal of the system member according to the first embodiment;
FIG. 6 is an exemplary diagram that illustrates an operation of the server according to the first embodiment;
FIG. 7 is an exemplary diagram that illustrates virtual power generation facilities viewed from the system member in the first embodiment;
FIG. 8 is a block diagram that illustrates the entire structure of a power station system according to a second embodiment;
FIG. 9 is a block diagram that illustrates the detailed structure of a server according to the second embodiment;
FIG. 10 is an exemplary diagram that illustrates a data flow relating to a power trading in the second embodiment;
FIG. 11 is a flowchart that illustrates an operation of the server according to the second embodiment;
FIG. 12 is an exemplary diagram of a screen displayed on a computer terminal of the system member according to the second embodiment;
FIG. 13 is an exemplary diagram of a power trade according to a third embodiment;
FIG. 14 is a flowchart that illustrates an operation of a forcible power sales according to a fourth embodiment;
FIG. 15 is a flowchart that illustrates an operation of a power sales termination according to the fourth embodiment;
FIG. 16 is an exemplary diagram that illustrates an operation of a forcible power sales according to the fourth embodiment;
FIG. 17 is a screen of a computer terminal indicating a trade termination according to the fourth embodiment;
FIG. 18 is an exemplary diagram that illustrates the account information of the system member according to a fifth embodiment;
FIG. 19 is a flowchart that illustrates an operation of the server according to the fifth embodiment;
FIG. 20 is an exemplary diagram that illustrates a forcible power sales due to full charging according to the fifth embodiment;
FIG. 21 is an exemplary diagram that illustrates virtual power generation facilities and a virtual energy storage device viewed from the system member in the fifth embodiment;
FIG. 22 is an exemplary diagram that illustrates a screen of the computer terminal that displays power trade information according to a sixth embodiment;
FIG. 23 is an exemplary diagram of a power trade according to the sixth embodiment;
FIG. 24 is a flowchart that illustrates an operation of a server according to the sixth embodiment;
FIG. 25 is an exemplary diagram that illustrates a screen of the computer terminal that displays power generation share number trade information according to a seventh embodiment;
FIG. 26 is an exemplary diagram that illustrates a power generation share number trade according to the seventh embodiment;
FIG. 27 is a flowchart that illustrates an operation of a server according to the seventh embodiment;
FIG. 28 is an exemplary diagram that illustrates a screen of the computer terminal that displays power storage number trade information according to an eighth embodiment;
FIG. 29 is an exemplary diagram that illustrates a power storage number trade according to the eighth embodiment; and
FIG. 30 is a flowchart that illustrates an operation of a server according to the eighth embodiment.

### DETAILED DESCRIPTION

### (First Embodiment)

A power station system according to a first embodiment and a server thereof will be described in detail below with reference to the figures.

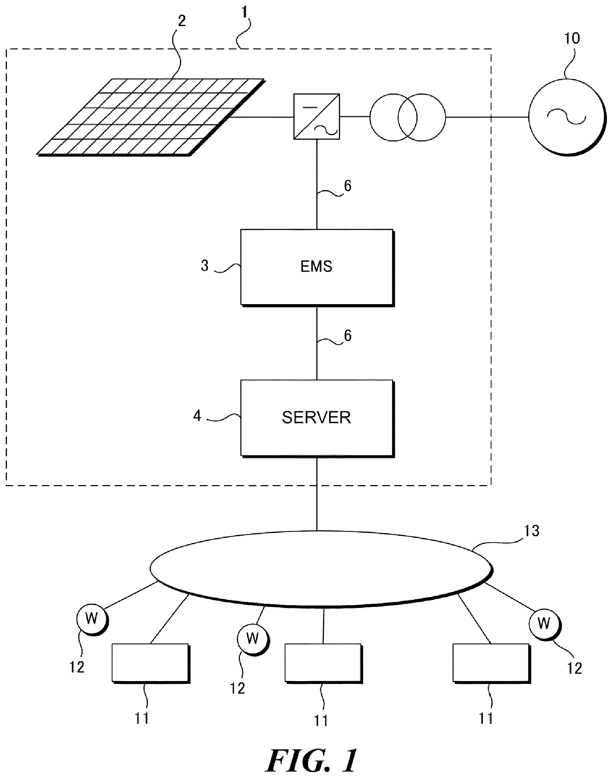

As illustrated in FIG. 1, a power station system 1 according to this embodiment includes power generation facilities 2, an EMS 3, and a server 4. The power generation facilities 2 are in connection with a power transmission line 10 like a power system and a local power distribution line, via a transformer, etc. The EMS 3 is connected to a terminal capable of transmitting data to and receiving data from the power generation facilities 2 and the server 4 via a communication line 6. In this power station system 1, the power generated by the power generation facilities 2 is owned by system members. The power station system 1 proportionally distributes the generated power to the system members in accordance with the number of ownership shares. Accordingly, the power station system 1 sells the generated power to the power-transmission-line 10 side, and gives a power sales profit to the system members in accordance with the distributed power amount.

The power generation facilities 2 includes a power generator. Example power generators are facilities that produce renewable energy, such as solar power generation facilities, wind power generation facilities, tidal power generation facilities, and a combination thereof, a thermal power generation station, a nuclear power generation station, a water power generation station, and a combination thereof. It is desirable that the power generation facilities 2 at least has a scale that exceeds rated outputs for household use, such as mega solar power generation station, etc.

The facilities which produce renewable energy also include a power conditioner. The power conditioner boosts the output voltage of the power generator, converts DC power into AC power, suppresses harmonic waves, and controls a power-factor. The power conditioner for solar power generation includes, for example, a DC-DC converter or a boost chopper for a Maximum Power Point Tracking (MPPT) control, an inverter for DC conversion by a PWM control, and an LCR AC filter circuit for suppressing and controlling harmonic waves, etc.

The EMS 3 is an energy management system that controls the power transmission in the power generation facilities 2 and in the power station system 1. The EMS 3 monitors a power flow of the power generation amount and the sold power amount. In addition, the EMS 3 receives control instructions, such as power suppression from the instruction input of a base system. Furthermore, the EMS 3 controls the power generation of the power generation facilities 2, and controls an output to the power transmission line 10 based on a monitoring result and instructions.

The server 4 is the computer connected to a network 13. The network 13 is a communication infrastructure, and is, for example, communication lines, such as a wired LAN network, a wireless LAN network, the Internet network, or a dedicated communication line, or a combination thereof. The network 13 is also connected to a terminal capable of transmitting data to and receiving data from a computer terminal 11 of the system member, and a power meter 12 such as a smart meter which measures power consumption at the facilities owned by the system member. This server 4 may be included in the EMS 3 as a function thereof, or may be a different and independent computer from the EMS 3.

The server 4 builds virtual private power generation facilities of the system member. The virtual private power generation facilities have a power generation capability, and indicate generated power and a power sales profit to the system member. That is, the server 4 proportionally distributes the generated power to the system members on data, distributes the power sales profit to the system member on data, and provides information of these results to the system members.

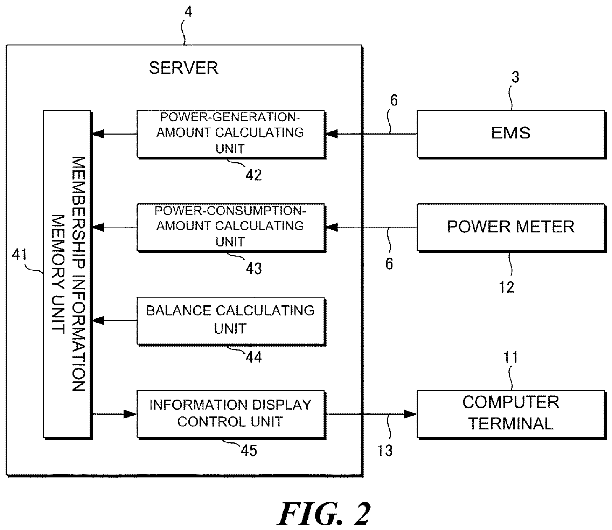

FIG. 2 is a block diagram that illustrates a functional structure of the server 4. As illustrated in FIG. 2, the server 4 includes a member information memory unit 41 including a memory, a power-generation-amount calculating unit 42, a power-consumption-amount calculating unit 43, and a balance calculating unit 44 each mainly including a network adapter, a processor, and a memory, and an information display control unit 45 that mainly includes a transmitter and a receiver like a network adapter, and a processor.

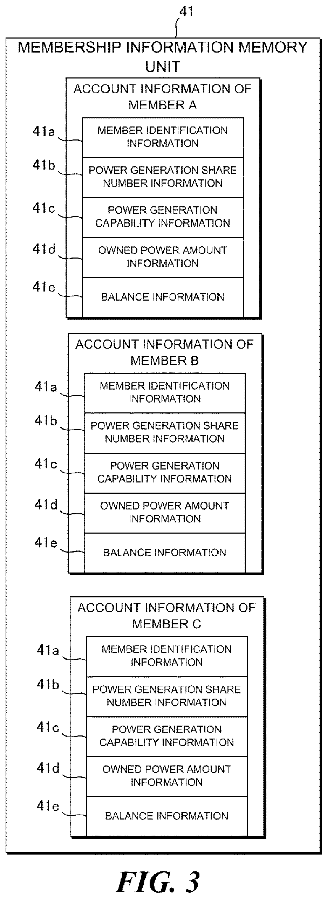

The member information memory unit 41 stores the account information of each system member as illustrated in FIG. 3. The account information of the system member includes member identification information 41a, power generation share number information 41b, power generation capability information 41c, owned power amount information 41d, and balance information 41e. The member information memory 41 stores the account information for each system member.

The power generation share number information 41b is a variable which indicates the power generation capability of the virtual power generation facilities of the system member, and is represented by a unit number with a predetermined generated power like 1 kW being 1 unit. The total share numbers of all system members is restricted to a number obtained by dividing the rated generated power of the power generation facilities 2 by predetermined generated power per a share. The power generation capability information 41c indicates the power generation capability of the virtual power generation facilities 2 of the system member, and is created by multiplying the predetermined power per a share with a value indicated by the power generation share number information of the system member. The owned power amount information 41d is a variable that indicates the power amount owned by the system member. The balance information 41e is a variable that indicates the amount of money obtained by the system member through the power station system 1, and may take a negative value.

The power-generation-amount calculating unit 42 proportionally distributes the power generation amount of the power generation facilities 2 in accordance with the power generation share number, and updates the owned power amount information 41d with a distribution value. The power generation amount is received from the EMS 3 via the communication line 6. The total power generation share numbers are calculated beforehand, and stored in a memory. In addition, a calculation function of the total power generation share numbers may be provided, and in this case, the rated value of the power generation facilities and the predetermined power per a share are stored in the memory.

The power-consumption-amount calculating unit 43 subtracts the value indicated by the power consumption amount information 43a from the owned power amount information 41d. More specifically, the power-consumption-amount calculating unit 43 receives the power consumption amount information 43a from the power meter 12, and subtracts the power consumption amount information 43a from the owned power amount information 41d of the same member. It is unnecessary for the facilities of the system member to directly receive power from the power generation facilities 2. That is, it is unnecessary for the power receiving facilities in the facilities of the system member to be connected to the power generation facilities 2 via the power transmission line 10.

The balance calculating unit 44 changes the balance information 41e in accordance with a change in the owned power amount information 41d. That is, the balance calculating unit 44 distributes power sales profit. The power sales unit price is stored in the memory beforehand. The balance calculating unit 44 multiplies a sales unit price by the value obtained by subtracting the value of the power consumption amount information 43a from the value of the owned power amount information 41d, and adds the result value to the balance information 41e. The sales unit price is a variable, and may be received from an electric power company, etc. via a network. It is on the premise that, in the first embodiment, all power generation amount is transmitted to the power transmission line 10.

The information display control unit 45 creates the power generation capability information 41c, and transmits the power generation capability information 41c, the power consumption amount information 43a, the owned power amount information 41d, and the balance information 41e to the computer terminal 11 of the system member via the network 13. The created power generation capability information 41c is stored in the member information memory unit 41. The predetermined power per a share is stored in the memory beforehand.

When the computer terminal 11 of the system member is accessing the server 4 via a browser, the information display control unit 45 creates data in the form of, for example, HTML which lays out the power generation capability information 41c, the power consumption amount information 43a, the owned power amount information 41d, and the balance information 41e on a screen, and transmits the data to the computer terminal 11 that is an access source.

When an access is made to the server 4 from the computer terminal 11 like a portable terminal via an application, the information display control unit 45 transmits the power generation capability information 41c, the power consumption amount information 43a, the owned power amount information 41d, and the balance information 41e to the computer terminal 11 that is the access source. At the computer terminal 11 such as a portable terminal, etc., an application creates a screen that lays out and displays the power generation capability information 41c, the power consumption amount information 43a, the owned power amount information 41d, and the balance information 41e.

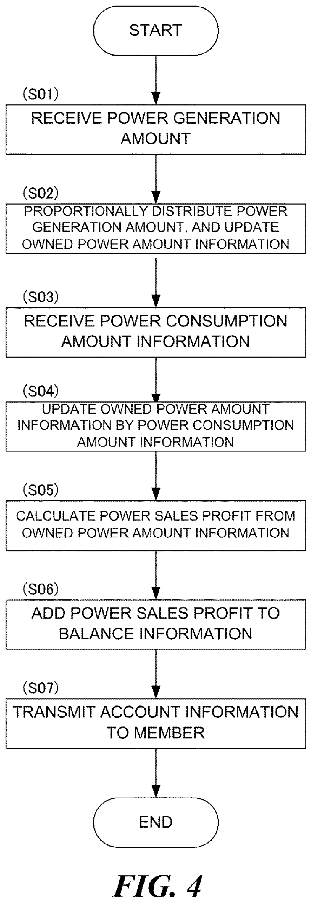

FIG. 4 is a flowchart that illustrates the flow of an operation of such server 4. First, the server 4 receives the data of the power generation amount from the EMS 3 via the communication line 6 (step S01). When receiving the data on the power generation amount, the power-generation-amount calculating unit 42 updates the owned power amount information 41d by a value obtained by dividing the power generation amount by the total power generation share numbers of all of the system members, and multiplying divided value by power generation share number of the system member (step S02) .

In addition, the server 4 receives the power consumption amount information 43a from the computer terminal 11 of the system member via the network 13 (step S03). The power-consumption-amount calculating unit 43 subtracts, from the owned power amount information 41d, the value indicated by the power consumption amount information 43a (step S04).

The balance calculating unit 44 calculates the power sales profit by multiplying the owned power amount information 41d from which the power consumption amount information 43a is subtracted by the sales unit price (step S05). Next, the balance calculating unit 44 adds the power sales profit to the balance information 41e (step S06).

The information display control unit 45 transmits the power generation capability information 41c, the power consumption amount information 43a, the owned power amount information 41d, and the balance information 41e to the computer terminal 11 that is the access source (step S07). The computer terminal 11 at the system-member side displays the power generation capability information 41c, the power consumption amount information 43a, the owned power amount information 41d, and the balance information 41e.

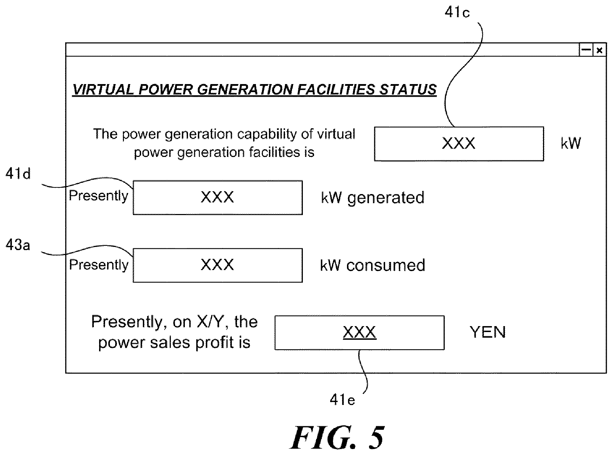

According to this power station system 1, an ownership manager invites a system member, and a purchaser who purchases the ownership in reply to the invitation becomes a system member. The owner manager gives new member identification information 41a to the purchaser, operates a console, and writes the information of the new system member including the purchased power generation share number in the membership information memory unit 41 of the server 4. Hence, as illustrated in FIG. 5, the computer terminal 11 of the system member displays, together with the power generation capability information 41c, the owned power amount information 41d, the power consumption amount information 43a, and the balance information 41e which change time to time.

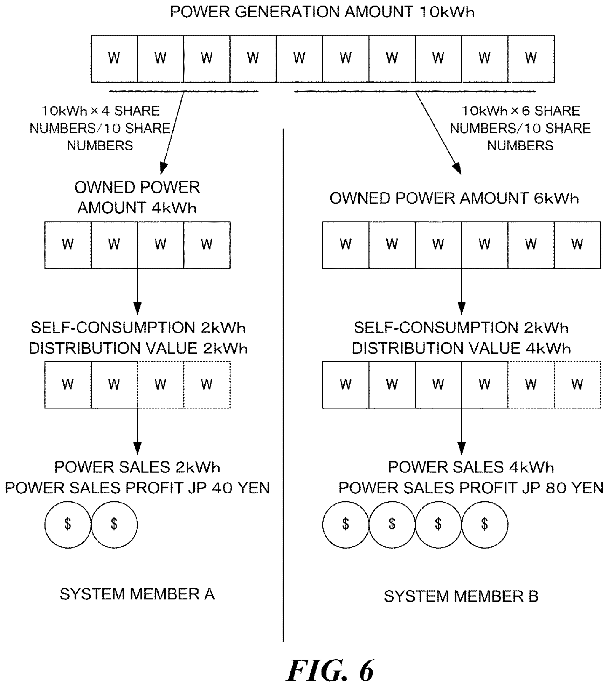

For example, as illustrated in FIG. 6, the power generation facilities 2 are to output the power generation amount of 10 kWh. Here, generated power per a share is set to 1kWh, and between system members of total of two, a system member A owns four shares and a system member B owns six shares . Accordingly, the system member A self-consumes 2kWh, and the sales unit price is set to 20 YEN per 1 kWh.

At this time, the generated power of 4 kWh is distributed to the system member A, and 2 kWh, which the power consumed by the system member A is subtracted, is sold at 40 YEN. Hence, the computer terminal of the system member A displays the owned power amount information 41d that indicates 4 kWh, the power consumption amount information 43a that indicates 2 kWh, and the balance information 41e that indicates 40 YEN.

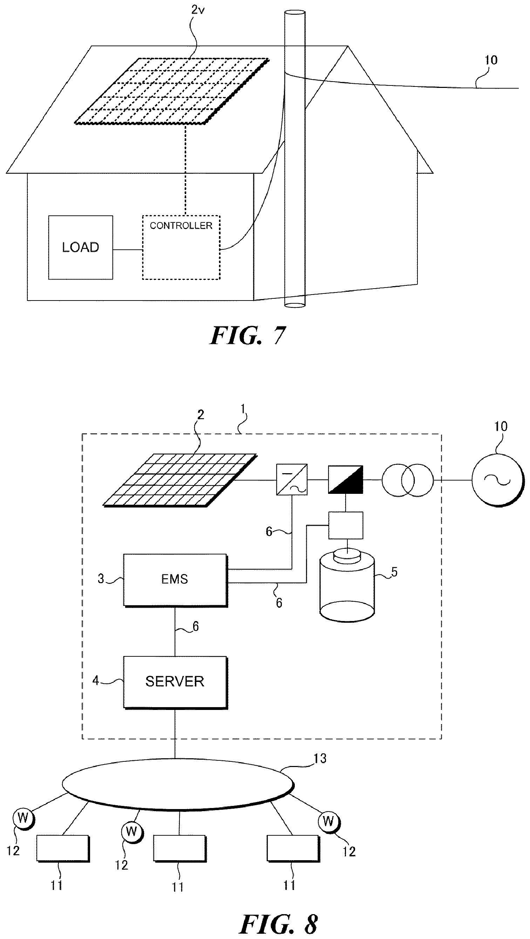

As for the system member, as illustrated in FIG. 7, it seems as if virtual power generation facilities 2v indicated by the power generation capability information 41c is installed at owned facilities such as the home of the system member, the virtual power generation facilities 2v generate power indicated by the owned power amount information 41d, self-consumes the power amount indicated by the power consumption amount information 43a by loads like a household electrical appliance in the owned facilities, sells the remaining power amount, and the power sales profit indicated by the balance information 41e is created.

As for such virtual power generation facilities 2v, since no actual power generation facilities are installed at the owned facilities of the system member, a preparation such as construction is unnecessary, and an individual maintenance work is also unnecessary. In addition, when the system member sells the ownership and leaves the system, the ownership manager operates the console and deletes the information of the member left from the membership information memory unit 41. As described above, since it is unnecessary to privately install owned power generation facilities, to privately maintain own power generation facilities, and to privately remove own power generation facilities, the consumer is facilitated to have power generation facilities.

Since the owner of the power station system 1 can expect the charge for system membership upon constructing the power station system 1, it is unnecessary for the owner to bear all construction costs and maintenance costs, facilitating a construction of the power station system 1.

As described above, the server 4 stores, for each member identification information 41a of each system member, the power generation share number information 41b, the owned power amount information 41d, and the balance information 41e in the memory. In addition, the server 4 receives the power generation amount information of the power generation facilities 2 via a receiver such as the network adapter.

Still further, this server 4 includes the power-generation-amount calculating unit 42, the trade amount calculating unit 47, the balance calculating unit 44, and the information display control unit 45. The power-generation-amount calculating unit 42 adds the generated power distribution amount obtained by proportionally distributing the value of the power generation amount information in accordance with the value of the power generation share number information 45b to the value of the owned power amount information 41d of each member. The trade amount calculating unit 47 subtracts the sold power amount from the owned power amount information 41d. The balance calculating unit 44 calculates the power sales profit based on a change in the owned power amount information 41d, and adds the calculated value to the balance information 41e. The information display control unit 45 transmits the owned power amount information 41d and the balance information 41e of the member to the computer terminal 11.

Hence, it seems for the system member as if the system member has the virtual power generation facilities 2v even if the system member owns no actual power generation facilities. Hence, for the system member, problems that disturb installation of power generation facilities, such as installation space, installation costs, maintenance costs, a maintenance work, etc., are addressed, increasing the attraction to the ownership. In contrast, for the investor of the power station system 1, it becomes easy to sell the ownership, facilitating an expectation for collecting the construction costs of the power station system 1.

In addition, in the power station system 1, the power member 12 of the system member is connected to a terminal capable of transmitting and receiving data, and the power consumption amount information 43a is received from the power meter 12. This power station system 1 includes the power-consumption-amount calculating unit 43. The power-consumption-amount calculating unit 43 subtracts the value of the power consumption amount information 43a of the member from the value of the owned power amount information 41d of the same member. The balance calculating unit 44 calculates the power sales profit in cases other than a subtraction based on the power consumption amount information 43a. The information display control unit 45 transmits the power consumption amount information 43a to the computer terminal 11.

That is, is the power self-consumed by the system member is subtracted from the owned power amount information 41d. Hence, for the system member, the virtual power generation facilities 2v operate as is actually installed at the owned facilities of the system member, further increasing the attraction to the ownership. In contrast, for the investor of the power station system 1, it becomes further easy to sell the ownership, further facilitating an expectation for collecting the construction costs of the power station system 1.

### (Second Embodiment)

Next, a power station system 1 according to a second embodiment, and a server 4 thereof will be described in detail with reference to the figures. The same structure and same function as those of the first embodiment will be denoted by the same reference numeral, and the detailed description thereof will not be repeated.

As illustrated in FIG. 8, the power station system 1 further includes an energy storage device 5. The energy storage device 5 converts charging power into chemical energy etc., accumulates this energy, converts this energy into power, and discharges this power, like the secondary batteries and hydrogen-power storage devices. A hydrogen-power storage device creates hydrogen by electrical decomposition of water, and stores energy.

The EMS 3 transmits the total power consumption amounts of all the system members, and the power amount instructed by the server 4 based on a demand from the system member to the power-transmission-line-10 side. The EMS 3 preferentially utilizes the power generation facilities 2 as a supply source to the power transmission line 10. When the power generation amount of the power generation facilities 2 is less than the power amount to be output to the power transmission line 10, the energy storage device 5 is set to be the supply source. In addition, when the power generation amount of the power generation facilities 2 exceeds the power amount to be output to the power transmission line 10, the remaining power is charged in the energy storage device 5.

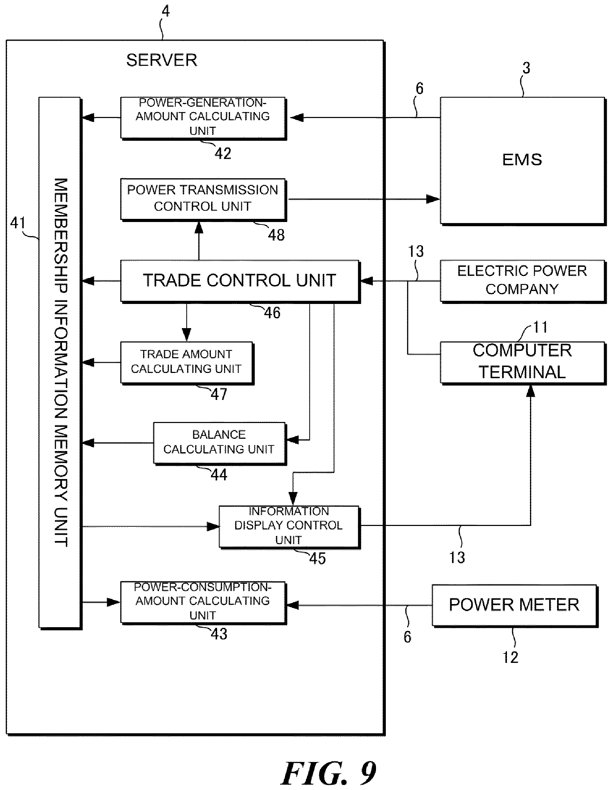

That is, in the first embodiment, the generated power is promptly sold entirely, but in the second embodiment, the energy storage device 5 is provided, and the desired amount of the system member can be sold at a timing at which the system member wants to sell the power. This server 4 includes, as illustrated in FIG. 9, a trade control unit 46, a trade amount calculating unit 47, and a power transmission control unit 48 each including a network adapter and a processor.

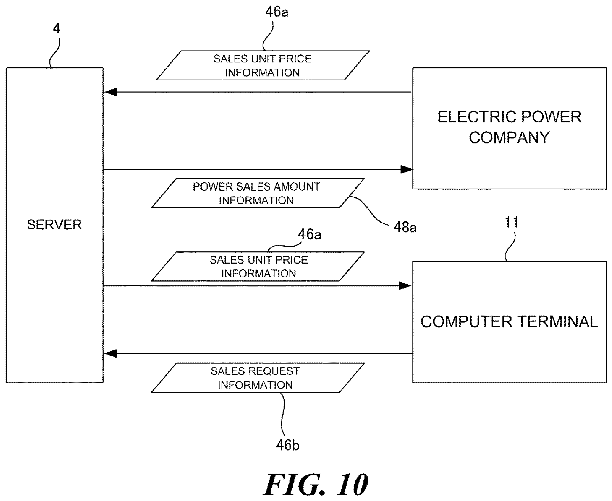

As illustrated in FIG. 10, the information display control unit 45 transmits sales unit price information 46a to the computer terminals of the system members, in addition to the power generation capability information 41c, the power consumption amount information 43a, the owned power amount information 41d, and the balance information 41e. The sales unit price information 46a is purchase unit price information for other power traders.

The trade control unit 46 receives the sales unit price information 46a from the computer terminal of consumptive interests, such as electric power companies and other power station systems via the network 13. The information display control unit 45 transmits the sales unit price information 46a received by the trade control unit 46 to the computer terminals 11 of the system members. In addition, the trade control unit 46 receives sales request information 46b from the system member, and settles a trade. The sales request information 46b indicates a value of power sales amount transmitted from the computer terminal 11 of the system member.

The trade amount calculating unit 47 reflects the power trade result to the owned power amount information 41d. That is, the trade amount calculating unit 47 subtracts the power sales amount indicated by the sales request information 46b from the owned power amount information 41d. The balance calculating unit 44 multiplies the power sales amount indicated by the sales request information 46b by the sales unit price indicated by the sales unit price information 46a, and adds the result to the balance information 41e.

The power transmission control unit 48 instructs, via the communication line 6, the EMS 3 to transmit power to a power transmission line 11 directs power supply on the power transmission line 11. That is, the power transmission control unit 48 collects up the sales request information 46b of the settled trade in power sales amount information 48a, and transmits the information to the EMS 3. The power sales amount information 48a is a total of the values indicated by all sales request information 46b within the same time period.

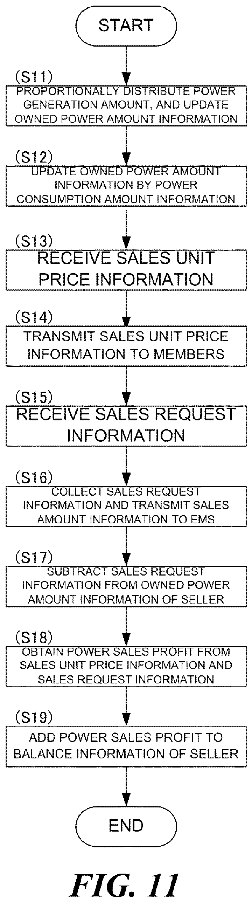

FIG. 11 is a flowchart that illustrates a power sales operation of the server 4. First, the server 4 receives the data of the power generation amount from the EMS 3 via the communication line 6. When the data of the power generation amount is received, the power-generation-amount calculating unit 42 divides the power generation amount by the total of the power generation share numbers of all system members, multiplies the divided amount by the power generation share number of the system member, and adds the value obtained to the owned power amount information 41d (step S11).

The power-consumption-amount calculating unit 43 receives the power consumption amount information 43a from the computer terminal 11 of the system member via the network. The power-consumption-amount calculating unit 43 subtracts the value of the power consumption amount information 43a from the owned power amount information 41c (step S12).

In addition, the trade control unit 46 receives the sales unit price information 46a from the computer terminal of consumptive interests (step S13). The information display control unit 45 transmits the power generation capability information 41c, the power consumption amount information 43a, the owned power amount information 41d which the power consumption amount information 43a is subtracted from, the balance information 41e, and the sales unit price information 46a to the computer terminal 11 that is an access source (step S14).

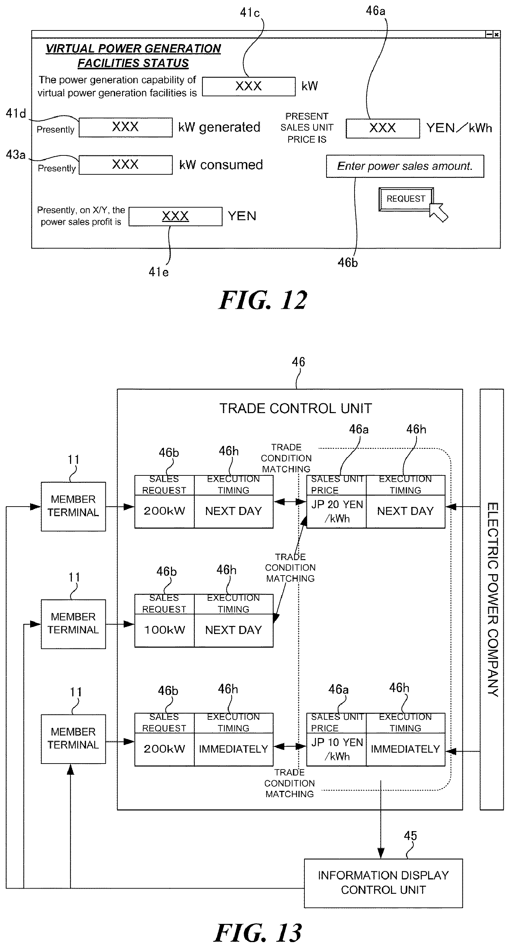

FIG. 12 is an exemplary diagram that illustrates a screen displayed on the computer terminal 11 of the system member. Displayed in the screen are the power generation capability information 41c, the power consumption amount information 43a, and the balance information 41e. In addition, the owned power amount information 41d and the sales unit price information 46a are displayed in the screen, and an input field that indicates the power sales amount, and a request set button are displayed in the screen.

When the system member inputs the power sales amount in the input field using the console of the computer terminal 11 with the owned power amount information 41d being the upper limit, and pushes the request set button, the sales request information 46b based on the input value is transmitted to the server 4 via the network 13 from the computer terminal 11 of the system member (step S15).

In the server 4, the power transmission control unit 48 sums the values indicated by the sales request information 46b within the same time period, and transmits the total values as the power sales amount information 48a to the EMS 3 via the communication line 6 (step S16). At the EMS 3 side, when receiving the power sales amount information 48a, the power amount indicated by the power sales amount information 48a is transmitted to the power transmission line 10 from the power generation facilities 2 or the energy storage device 5 or from both the power generation facilities and the energy storage device.

In addition, the trade amount calculating unit 47 in the server 4 subtracts the power sales amount indicated by the sales request information 46b from the owned power amount information 41d (step S17). Still further, the balance calculating unit 44 calculates the power sales profit by multiplying the power sales amount indicated by the sales request information 46b by the sales unit price indicated by the sales unit price information 46a (step S18). Next, the balance calculating unit 44 adds the power sales profit to the balance information 41e (step S19).

This power station system 1 includes the energy storage device 5, and the trade amount calculating unit 47 subtracts the power sales amount from the owned power amount information 41d based on the request from the computer terminal 11. The energy storage device 5 is lent to the system member, enabling the system member to sell the necessary power amount at a timing the system member desires. A business operator such as an electric power company responsible for the system stabilization changes the presented sales unit price information 46a to control the power transmission amount from the power station system 1 without forcing the system members to transmit power or suppress the power transmission as avoidable as possible.

When, for example, a suppression of the power transmission amount from the power station system 1 is desired, the business operator such as an electric power company responsible for the system stabilization may present sales unit price information 46a of low price. In addition, when a prompt of the power transmission amount from the power station system 1 is desired, the electric power company may present sales unit price information 46a of high price. In view of the principle of a demand curve which is the balance between the price and the demanded amount, the power sales amount of the system member can be controlled in accordance with the sales unit price information 46a, and a keen change in power transmission by the power station system 1 can be suppressed, enabling the suppression of the power transmission from the power station system 1.

In contrast, by introduction of this system, the system member can sell the power at a higher price, can promptly collect the purchase fee for the ownership, and can maximize the profit by participating in the power trade market. Hence, from the investor who constructs the power station system 1, the ownership can be made attractive by a reason of investment, enabling the investor to expect the collection of construction costs.

### (Third Embodiment)

Next, a power station system according to a third embodiment and a server thereof will be described in detail with reference to the figures. The same structure and same function as those of the first or second embodiment will be denoted by the same reference numeral, and the detailed description thereof will not be repeated.

As illustrated in FIG. 13, the information display control unit 45 transmits the sales unit price information 46a to which execution timing information 46h is added to the computer terminals of the system members. The execution timing information 46h indicates the timing which the power trade is executed, and examples of such information are, for example, real time, by today, and by next day.

The trade control unit 46 receives a set of the sales unit price information 46a and the execution timing information 46h from a trade wisher via the network 13, and the information display control unit 45 transmits the set to the computer terminal 11 of the system member. Displayed in the screen of the computer terminal 11 of the system member are the input field that indicates the power sales amount, a pull-down menu to select the execution timing, and the request set button.

The trade control unit 46 sets a trade based on the sales unit price information 46a that is made a set with the execution timing information 46h which is the same timing as that of the sales request information 46b. The power transmission control unit 48 transmits, to the EMS 3, each of power sales amount information 48a that is a collection of sales request information 46b at each execution timing 46h.

When the time indicated by the execution timing information 46h comes, the EMS 3 transmits power to the power transmission line 10 with the sales amount information 46a associated with this execution timing information 46h being taken into consideration. The management of the execution timing information 46h can be also made at the server-4 side, and when the timing indicated by the execution timing information 46h comes, the sales request information 46b is transmitted to the EMS 3, and the EMS 3 immediately executes power transmission.

According to this power station system 1, a purchase request and a sales request both contain the execution timing information 46h, and the trade control unit 46 makes a trade with a condition which the execution timing information 46h of both are consistent with each other.

According to this power station system 1, it becomes easy for one who are planning an operation schedule based on a demand-supply prediction of an electric power company, etc. to attain the power supply adjustment suitable for weather prediction. When, for example, weather of the next day is rain and solar power generation cannot be expected, the sales unit price information 46a to be associated with the next day's execution timing information 46h may be set at high price. In this case, the number of system members who respond to the power sales request increases, and the power supply can be managed by the power storage amount.

In addition, when, for example, next day's weather prediction is sunny, and the solar power generation may become excessive, the sales unit price information 46a to be associated with the next day's execution timing information 46h may be set to low price. In this case, the number of system members who respond to the power sales request decreases, the power transmission amount to the power transmission line 10 can be reduced, and thus the demand-supply balance can be achieved.

### (Fourth Embodiment)

Next, a power station system according to a fourth embodiment and a server thereof will be described in detail with reference to the figures. The same structure and same function as those of the first to third embodiments will be denoted by the same reference numeral, and the detailed description thereof will not be repeated.

The EMS 3 regulates the power transmission amount within a certain range to suppress a keen change in the power transmission amount to the power transmission line 10 in view of the system stabilization. This EMS 3 forcibly transmits the power transmission amount that falls within a range between the lower limit value and the upper limit value to the power transmission line 10. In addition, the EMS 3 forcibly transmits the power transmission amount that matches a power transmission suppressing instruction instructed from the input of a base system to the power transmission line 10.

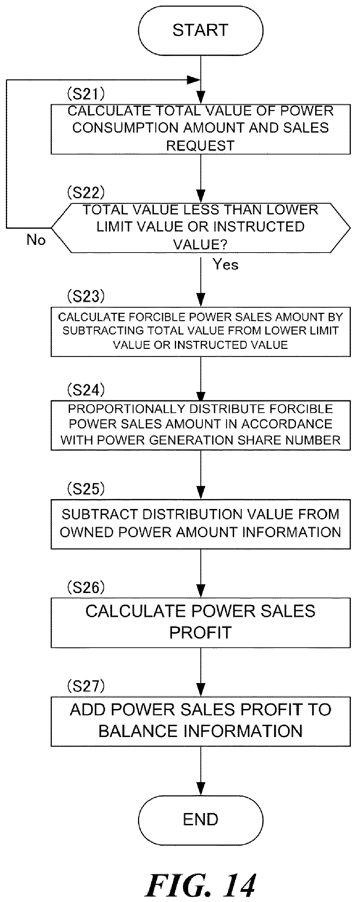

When the power transmission amount is less than the lower limit value or the power transmission amount instructed by the power transmission suppressing instruction, the server 4 carries out forcible power sales in a way that the power transmission amount reaches the lower limit or the instructed value. FIG. 14 is a flowchart that illustrates a forcible power sales operation by this server 4. As illustrated in FIG. 14, the power-generation-amount calculating unit 42 calculates a total of the power consumption amount information 43a and the sales request information 46b (step S21). When the total values are less than the lower limit value or the instructed value (step S22: YES), the power-generation-amount calculating unit calculates a forcible power sales amount obtained by subtracting the total values from the lower limit value or the instructed value (step S23).

Next, the power-generation-amount calculating unit 42 proportionally distributes the forcible power sales amount in accordance with the power generation share number of the system member (step S24), and subtracts the distribution value from the owned power amount information 41d (step S25) . In addition, the balance calculating unit 44 multiplies the distribution value by the value of the sales unit price information 46a (step S26), and adds a multiplication result to the balance information 41e of the system member (step S27) .

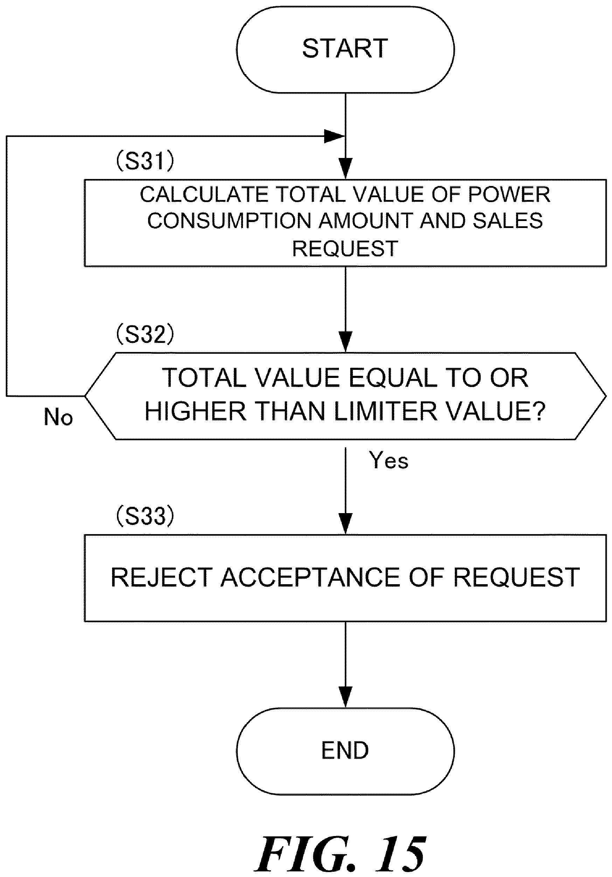

The trade control unit 46 stops the power sales request when a possibility that the power transmission amount exceeds the upper limit value or the power sales amount that matches the power transmission suppressing instruction occurs. FIG. 15 is a flowchart which illustrates an operation of stopping the sales request by this server 4. The trade control unit 46 calculates the total of the power consumption amount information 43a and the sales request information 46b (step S31). When the total value is equal to or greater than a limiter value (step S32: YES), acceptance of the sales request information 46b transmitted from the computer terminal 11 of the system member is rejected (step S33).

The limiter value is a value lower than the upper limit of the power transmission or the power transmission amount that matches the power transmission suppressing instruction. The trade control unit 46 stores the limiter value in the memory beforehand. Alternatively, the trade control unit 46 calculates the power transmission amount that matches the power transmission suppressing instruction from the rated value, etc., of the power generation facilities 2. When rejecting the acceptance of the sales request, the sales request information 46b is discarded, and a message that the sales request is not accepted may be transmitted to the computer terminal 11 of the system member.

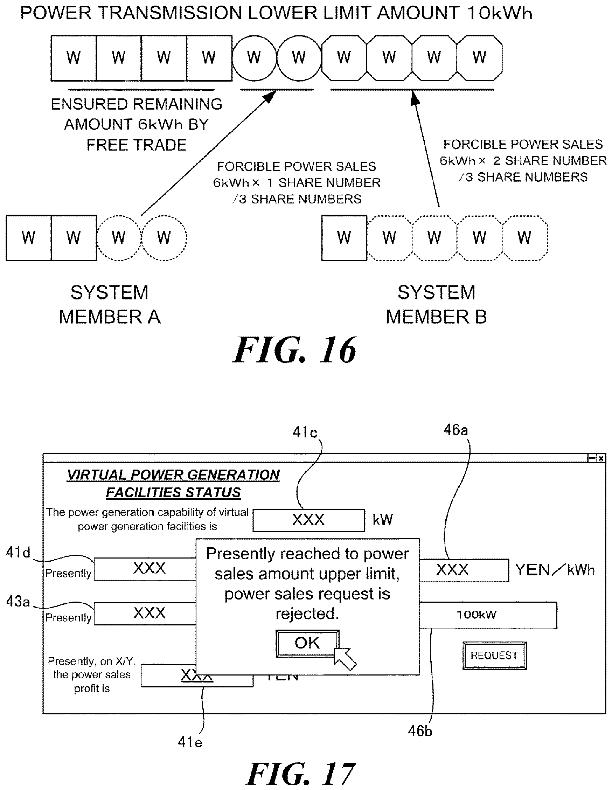

For example, as illustrated in FIG. 16, it is necessary to control the power transmission amount to 10 kW, and there is only 4 kW of power sales amount ensured by free trading of the system members. In this case, from the total of two system members, the power station system 1 forces to sell 2 kW of power from the system member who has one power generation share number between the total of two system members, and 4 kW of power from the system member who has two power generation share numbers, thereby ensuring 10 kW of power sales. In addition, as illustrated in FIG. 17, when the upper limit value of the power transmission amount is 10 kW, and there is a limiter value that is 9 kW, the trade is stopped at a time which the power sales amount from the system members reaches 9 kW.

As described above, according to this power station system 1, the power-generation-amount calculating unit 42 proportionally distributes, in accordance with the value of the power generation share number information 41b, the remaining value of the positive value obtained by subtracting the power transmission amount to the external side of the system 1 from the lower limit value or the instructed value, and subtracts a distribution value from the owned power amount information 41d. In addition, the balance calculating unit 44 adds the power sales profit based on the distribution value to the balance information 41e. Still further, the trade control unit 46 stops the determination of the condition matching when the power transmission amount to the external side of the system 1 exceeds the upper limit value of the power transmission amount or the limiter value set based on the instructed value.

Hence, while free trading of power is generally ensured, a keen change in the power transmission amount from the power station system 1 is suppressed, and the power transmission amount can match the power transmission suppressing instruction instructed form the instruction input of the base system, thereby suppressing a possibility of deteriorating the system stabilization. Needless to say, the power sales amount to be forcibly sold may be proportionally distributed in accordance with the power storage share number information 41f.

### (Fifth Embodiment)

Next, a power station system 1 according to a fifth embodiment and a server 4 thereof according to a fifth embodiment will be described in detail with reference to the figures. The same structure and same function as those of the first to fourth embodiments will be denoted by the same reference numeral, and the detailed description thereof will not be repeated.

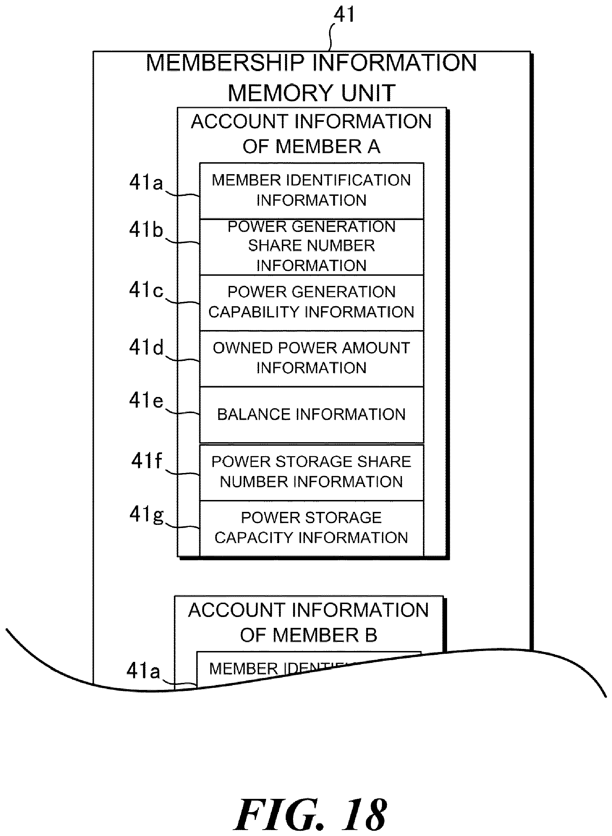

As illustrated in FIG. 18, the membership information memory unit 41 stores power storage share number information 41f and power storage capacity information 41g as the information of the system member. The power storage share number information 41f indicates the rated capacity of the virtual energy storage device owned by the system member, and is a variable represented by a unit number with a predetermined capacity such as 1 kWh being a unit. The total of the power storage share numbers of all the system members is limited to the value obtained by dividing the rated capacity of the energy storage device 5 by the predetermined capacity per a share. The power storage capacity information 41g indicates the rated value of the virtual power storage device owned by the system member, and is calculated by multiplying the number indicated by the power storage share number information 41f by the predetermined capacity per a share.

The power-generation-amount calculating unit 42 regulates the upper limit value of the owned power amount information 41d to the power storage upper limit of the system member. The power storage upper limit of the system member is a value indicated by the power storage capacity information 41g. The power-generation-amount calculating unit 42 proportionally distributes the power generation amount of the power generation facilities 2 in accordance with the power generation share number, and calculates the excess value that exceeds the power storage capacity information 41g. The trade control unit 46 sets the excess value as the sales request information 46b of the system member.

The information display control unit 45 creates the power storage capacity information 41g, and transmits the power storage capacity information 41g to the computer terminal 11 of the system member. When the power storage capacity information 41g is created, the information display control unit 45 stores the power storage capacity information 41g in the membership information memory unit 41. The predetermined capacity per a share is stored in the memory beforehand.

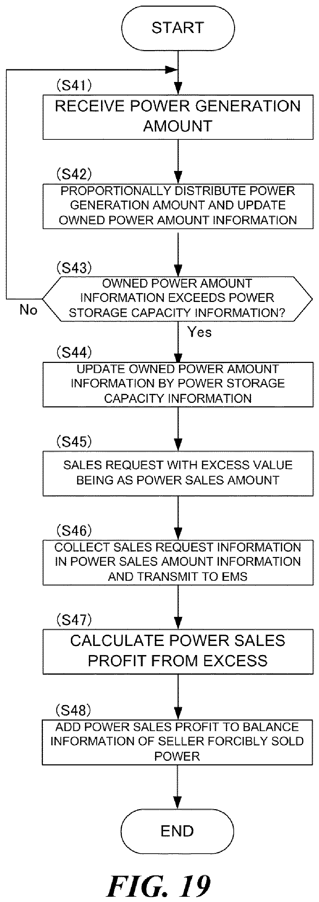

FIG. 19 is a flowchart that illustrates a flow until the server 4 calculates the owned power amount information 41d. First, the server 4 receives the data that indicates the power generation amount from the EMS 3 via the communication line 6 (step S41). When receiving the data that indicates the power generation amount, the power-generation-amount calculating unit 42 divides the power generation amount by the total power generation share numbers of all system members, multiplies the divided value by the power generation share number of the system member, and adds a value obtained to the owned power amount information 41d (step S42).

In addition, the power-generation-amount calculating unit 42 compares the power storage capacity information 41g with the owned power amount information 41d (step S43). When the owned power amount information 41d exceeds the power storage capacity information 41g (step S43: YES), the power-generation-amount calculating unit 42 changes the owned power amount information 41d to a value the power storage capacity information 41g (step S44).

Next, the trade control unit 46 sets the excess value as the sales request information 46b (step S45), and the power transmission control unit 48 collects the sales request information 46b in the power sales amount information 48a, and transmits the power sales amount information to the EMS 3 (step S46). In addition, the balance calculating unit 44 calculates the power sales profit by multiplying an excess value relative to the upper limit indicated by the power storage capacity information 41g by the sales unit price (step S47), and adds the power sales profit to the balance information 41e (step S48).

According to this power station system 1, when there is a leeway in the power storage share number, the ownership manager seeks for system membership, and a person who purchased the ownership in accordance with the seek becomes the system member of the energy storage device 5. The manager operates the console of the server 4, and writes in the membership information memory unit 41 of the server 4 to add the purchased power storage share number information 41g to the information of the system member.

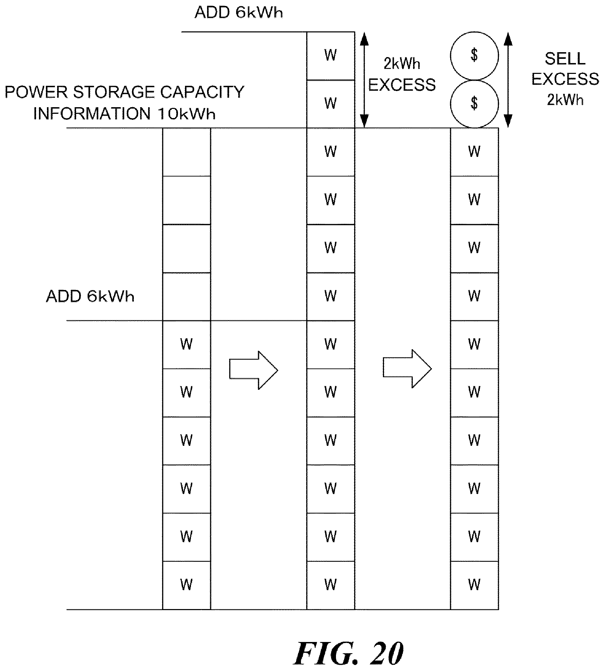

As illustrated in FIG. 20, for example, the power generation amount of 6 kWh is distributed to a system member C. This system member C has 10 power storage share numbers, in which one power storage share number is 1 kWh. When the owned power amount information 41d indicates zero, the interim value of the owned power amount information 41d is 6 kWh, but since the power storage capacity information 41g is 10 kWh, the interim value becomes a settled value.

In addition, the power generation amount of 6 kWh is to be distributed to the system member C. When the system member C does not sell power at all until this distribution, the interim value of the owned power amount information 41d becomes 12 kWh. Since the power storage capacity information 41g is 10 kWh, a full charge is virtually accomplished when charging of 4 kWh is carried out, and the excess power of 2 kWh is to be sold. The EMS 3 controls the power generation facilities 2, and transmits power of 2 kWh to the power transmission line 10. Next, the owned power amount information 41d becomes 10 kWh by subtracting sold power of 2 kWh from the interim value. In addition, the power sales profit by the sold power of 2 kWh is added to the balance information 41e.

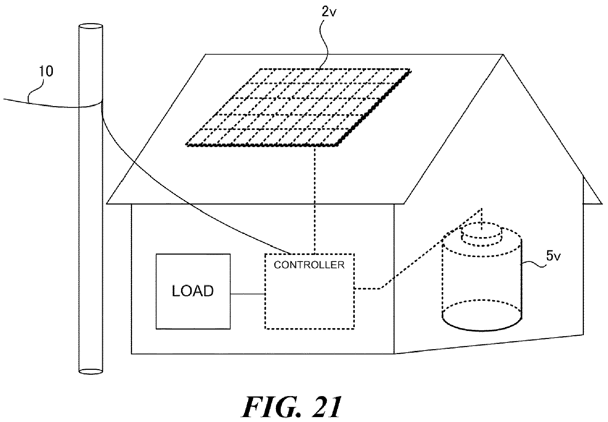

Hence, for the system member, as illustrated in FIG. 21, it seems as if a virtual energy storage device 5v indicated by the power storage capacity information 41g is installed at the owned possession facilities such as a home of the system member, and the virtual energy storage device 5v stores the power generation amount of the virtual power generation facilities 2.

Since such virtual energy storage device 5v is not actually installed at the owned facilities of the system member, a preparation such as a construction is unnecessary, and an individual maintenance work is also unnecessary. In addition, when the system member sells the ownership and leaves the system, the ownership manager operates the console of the server 4, and deletes the information of the system member from the membership information memory unit 41. It is unnecessary for the system member to operate, maintain, and discard an own energy storage device until collecting investment money, facilitating an introduction of privately owned power generation facilities.

Since the owner of the power station system 1 can expect the charge for system membership upon constructing the power station system 1, it is unnecessary for such owner to bear all construction costs and maintenance costs, facilitating a construction of the power station system 1.

### (Sixth Embodiment)

Next, a power station system 1 according to a sixth embodiment and a server 4 thereof will be described in detail with reference to the figures. The same structure and same function as those of the first to fifth embodiments will be denoted by the same reference numeral, and the detailed description thereof will not be repeated.

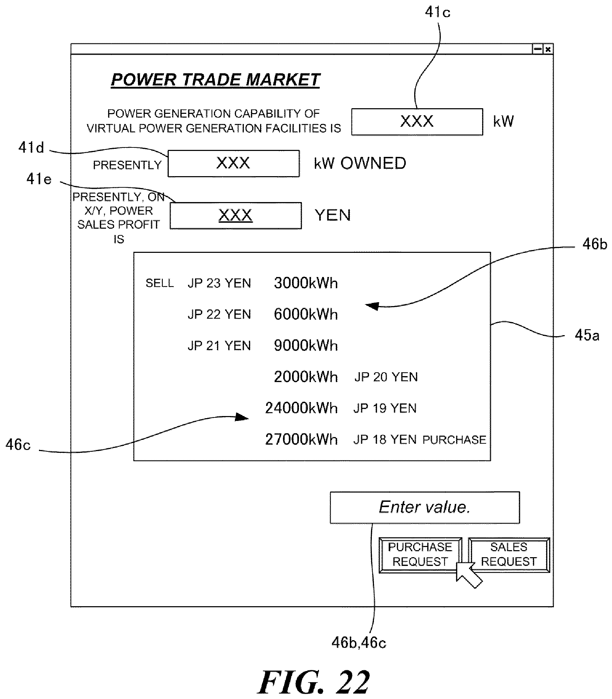

As illustrated in FIG. 22, the information display control unit 45 transmits power trade information 45a to the computer terminal 11 of the system member displaying a power trade screen. The power trade information 45a is a continuous session board that lists up purchase request information 46c and the sales request information 46c in limit orders. For example, a list in which unit prices are arranged in sequence in the vertical direction in an ascending order and the purchase amount and the sales amount corresponding to each unit price are arranged side by side to the unit price in the horizontal direction is created, and this list is transmitted to the computer terminal 11.

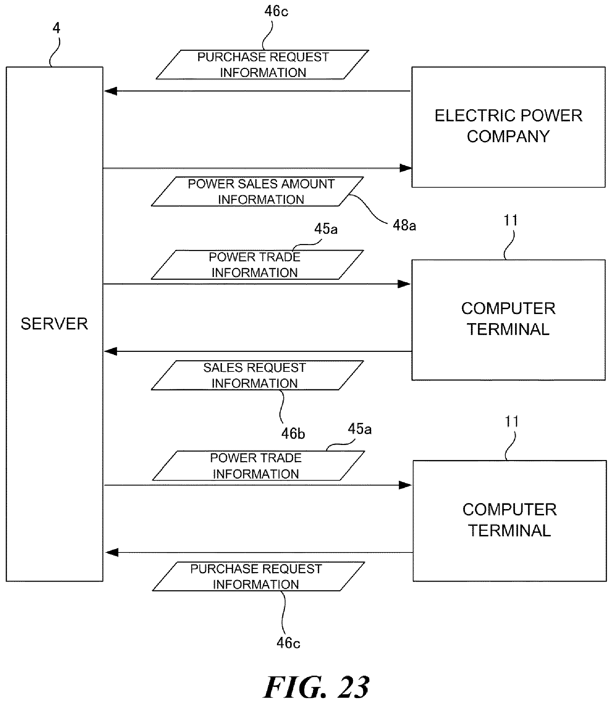

That is, as illustrated in FIG. 23, in addition to consumptive interests, such as an electric power company and other power station systems, this power station system 1 enables the system member to participate as a power trader. The trade control unit 46 provides a power trade market where consumptive interests and the system member participate, and controls the trade of power generation amount. The forcible power sales at the time of full charging by the system member is also executed via the power trade market. The trade control unit 46 determines a trade condition matching of the sales request information 46b that is a set of the sales unit price information and the power sales amount, and the purchase request information 46c that is a set of the purchase unit price information and the power purchase amount, and settles a trade. As for the sales request information 46b and the purchase request information 46c, in addition to the limit order, involved market order is taken place, and the market order does not contain the sales unit price information and the purchase unit price information.

The trade control unit 46 accepts the power sales amount with the value indicated by the owned power amount information 41d being the upper limit, and does not accept a instruction when the power sales amount exceeds the upper limit. The trade control unit 46 accepts the power purchase amount with the difference value between the value of the power storage capacity information 41g and the value of the owned power amount information 41d being the upper limit, and when the power purchase amount exceeds the upper limit, does not accept the request, and the trade control unit 46 reject the request.

The trade control unit 46 defines a matching of the sales unit price information and the purchase unit price information as the trade condition matched, determines the matching, and settles the trade of the sales request information and the purchase request information. Alternatively, a trade may be settled between a power sales in market order and the purchase request information 46c with the highest purchase unit price information, and between a power purchase request of market order and the sales request information 46b with the lowest sales unit price information.

When the sales request information 46b and the purchase request information 46c matched are both from the system members, no power sales amount information 48a is transmitted to the EMS 3. That is, power trade between the system members is executed on data. The trade amount calculating unit 47 adds the power purchase amount settled by the purchase request information 46c to the owned power amount information 41d of the system member. In addition, the trade amount calculating unit 47 subtracts the power sales amount settled by the sales request information 46b from the owned power amount information 41d of the system member.

The balance calculating unit 44 subtracts the value obtained by multiplying the power purchase amount by the purchase unit price of trade from the balance information 41e of the system member involved in the settled trade. In addition, the balance calculating unit 44 adds the value obtained by multiplying the power sales amount by the sales unit price of the trade to the balance information 41e of the system member involved in the settled trade.

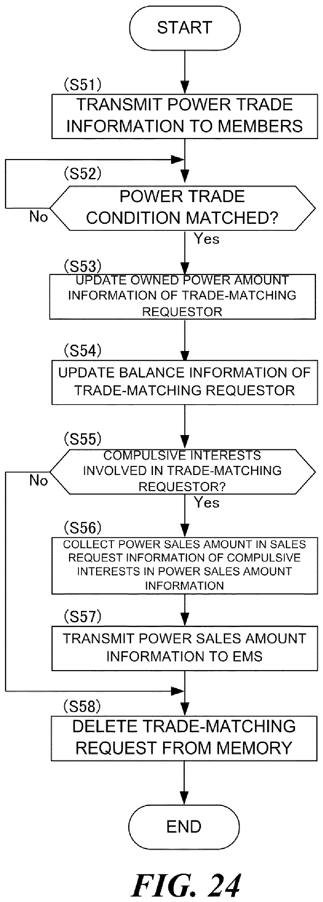

FIG. 24 is a flowchart that illustrates the flow of a trade between the system members of this server 4. First, the information display control unit 45 creates the power trade information 45a, and periodically transmits the latest information to the computer terminal 11 that is an access source (step S51). The transmission interval is optional from several seconds to several hours.

The computer terminal 11 of the system member transmits the sales request information 46b or the purchase request information 46c to the server 4 via the communication line 6. The trade control unit 46 determines whether or not the purchase request information 46c or the sales request information 46b transmitted from the computer terminal 11 matches a trade condition (step S52). That is, the trade control unit 46 stores all the purchase request information 46c and sales request information 46b, and specifies the sales request information 46b and the purchase request information 46c that can match the trade condition among the purchase request information 46c and sales request information 46b.

When a determination that the sales request information 46c or the purchase request information 46b matches the trading condition is made (step S52: YES), the trade amount calculating unit 46 subtracts or adds, from or to the owned power amount information 41d of the seller or purchaser, the power sales amount or the power purchase amount contained in the sales request information 46b or the purchase request information 46c determined capable of matching the trade condition (step S53). In addition, the balance calculating unit 44 multiples the power sales amount or the power purchase amount contained in the sales request information 46b or the purchase request information 46c determined capable of matching the trade condition by a contract price, and subtracts or adds the multiplied result from or to the balance information 41e of the seller or the purchaser (step S54).

When the sales request information 46b of the system member matches the trade condition, and the trading partner is consumptive interests such as an electric power company other than the system members (step S55: Yes), the power transmission control unit 48 collects the power sales amount contained in the sales request information 46b in the power sales amount information 48a (step S56), and transmits this information to the EMS 3 (step S57).

When the steps S53 to S57 complete, the trade control unit 46 deletes the purchase request information 46c or the sales request information 46b which has matched the trade condition from the memory (step S58).

When, for example, the purchase price presented by an electric power company is 20 YEN, and the purchase price presented by the system member A is 21 YEN, the sales request in market order by the system member B is set with the value in limit order of the system member. Hence, when the electric power company needs to accommodate the power, it is necessary to set the purchase price to be equal to or higher than 21 YEN. In contrast, when the electric power company desires power transmission suppression, and the purchase price presented by the system member also becomes a low price if the electric power company presents a lower price. In addition, while the power storage amount of the system member is near the upper limit, the number of sales requests increases, and the trade value of power decreases due to the necessity of trade execution. That is, by the participation of the system members in the power trade, the electric power company loses the right to decide the price, achieving a power trade that reflects demand-supply balance more appropriately.

As described above, according to this power station system 1, a determination on the trade condition matching between the sales request information 46b and the purchase request information 46c is made, and the actual power purchase amount is instructed to the EMS 3 based on the purchase request information 46c determined as matching the trade condition. At the server 4, the purchase request information 46c is received from the external side of the system such as consumptive interests, and the sales request information 46b is received from the computer terminal 11 of the system member. Next, the trade amount calculating unit 47 subtracts the value indicated by the sales request information 46b determined as matching the trade condition from the owned power amount information 41d of the seller. The balance calculating unit 44 increases the value of the balance information 41e of the seller based on the sales request information 46b determined as matching the trade condition.

Next, based on this presumption, the purchase request information 46c is also accepted from the computer terminals 11 of the system members. The trade amount calculating unit 47 adds the value indicated by the purchase request information 46c of the system member determined as matching the trade condition to the owned power amount information 41d of the purchaser. The balance calculating unit 44 decreases the balance information 41e of the purchaser based on the purchase request information 46c of the system member determined as matching the trade condition.

Since this enables a power trade between the system members, enabling an appropriate formation of the power price with the right of deciding the price not being deviated to consumptive interests such as an electric power company.

### (Seventh Embodiment)

Next, a power station system 1 according to a seventh embodiment, and a server 4 thereof will be describe in detail with reference to the figures. The same structure and same function as those of the first to sixth embodiments will be denoted by the same reference numeral, and the detailed description thereof will not be repeated.

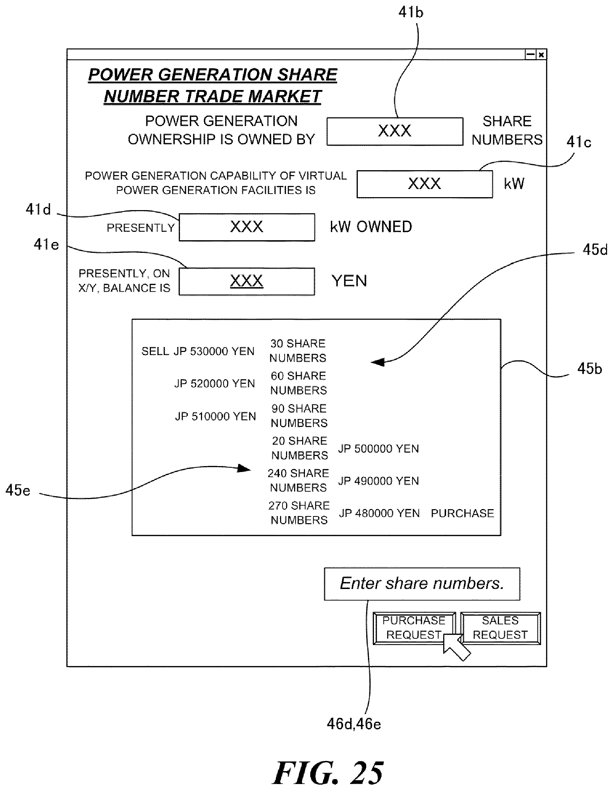

As illustrated in FIG. 25, the information display control unit 45 transmits power generation share number trade information 45b to the computer terminal 11 of the system member which displays a power generation share number trade screen. The power generation share number information 45b is a list of power generation share number purchase information 45e and power generation share number sales request information 45d in limit orders. The power generation share number purchase request information 45e is a purchase request in the power generation share number, and the power generation share number sales request information 45d is a sales request in the power generation share number. The power generation share number trade information 45b is created as, for example, a continuous session in which unit prices are arranged in sequence in the vertical direction in an ascending order, and the purchase share number and the sales share number corresponding to each unit price are arranged side by side to the unit price in the horizontal direction, and is transmitted to the computer terminals 11.

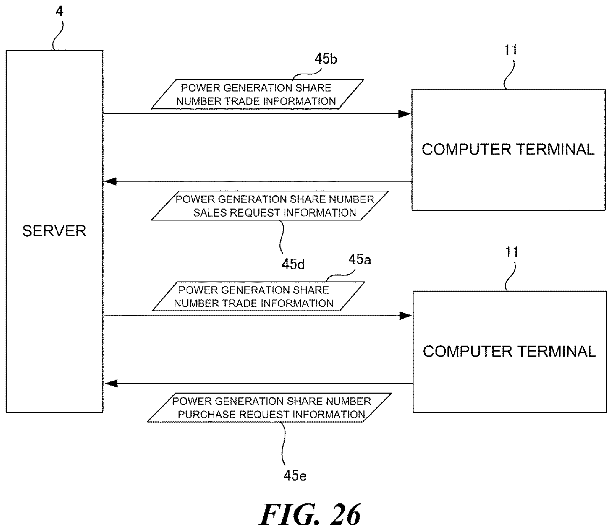

That is, as illustrated in FIG. 26, the trade control unit 46 of this power station system 1 provides the market for the ownership related to the power generation share number, and make the system members to participate. This trade control unit 46 controls the purchase and sales of the power generation share number by the system members. The trade control unit 46 settles a trade between the power generation share number sales request information 45d that is a set of the share-number sales unit price information and the sales share numbers, and the power generation share number purchase request information 45e that is a set of the share-number purchase unit price information and the purchase share numbers. As for the power generation share number sales request information 45d and the power generation share number purchase request information 45e, there is a market order in addition to a limit order, and the market order does not contain the share-number sales unit price information and the share-number purchase unit price information. In addition, the trade control unit 46 accepts the sales number with the value indicated by the power generation share number information being the upper limit, and when the sales power generation share number exceeds the upper limit, does not accept the request, and the trade control unit 46 rejects the request.

The trade control unit 46 settles a trade between the power generation share number purchase request information 46e and the power generation share number sales request information 46c having the share-number sales unit price information and the share-number purchase unit price information consistent with each other. Alternatively, a trade between the sales request in the market order and the power generation share number purchase request information 46e with the highest share-number purchase unit price information is settled, or a trade between the purchase request in the market order and the power generation share number sales request information 46c with the lowest share-number sales unit price information is settled.

The trade amount calculating unit 47 adds the purchase number settled by the power generation share number purchase request information 46e to the power generation share number information 41b of the system member. In addition, the trade amount calculating unit 47 subtracts the sales number settled by the power generation share number sales request information 46d from the power generation share number information 41b of the system member.

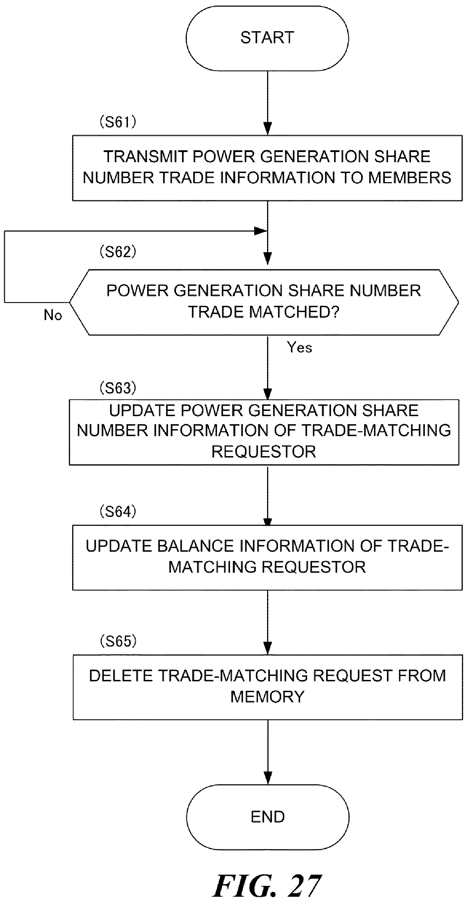

FIG. 27 is a flowchart that illustrates an operation of the server 4 for the trade between the system members. First, the information display control unit 45 creates the power generation share number trade information 45b, and periodically transmits the latest information to the computer terminal 11 that is an access source (step S61). The transmission interval is optional from several seconds to several hours.

The computer terminal 11 of the system member transmits the power generation share number sales request information 46d or the power generation share number purchase request information 46e to the server 4 via the network 13. The trade control unit 46 determines whether or not a trade condition can be matched regarding the power generation share number purchase request information 46e or the power generation share number sales request information 46d transmitted from the computer terminal 11 (step S62). That is, the trade control unit 46 stores all the power generation share number purchase request information 46e and power generation share number sales request information 46d, and specifies the power generation share number sales request information 46e and the power generation share number purchase request information 46d that can match the trade condition among the power generation share number sales request information 46e and the power generation share number purchase request information 46d.

When a determination that the power generation share number purchase request information 46e or the purchase amount number sales request information 46d matches the trade condition is made(step S62: YES), the trade amount calculating unit 47 subtracts or adds, from or to the power generation amount information 41b, the sales number or the purchase number contained in the power generation share number sales request information 46d or the power generation share number purchase request information 46e determined capable of matching the trade condition (step S63). Next, the balance calculating unit 44 multiples the share numbers contained in the power generation share number sales request information 46d or the power generation share number purchase request information 46e determined capable of matching the trade condition by a contract price, and subtracts or adds the multiplied result from or to the balance information 41e of the seller or the purchaser (step S64). After the steps S63 and S64 complete, the trade control unit 46 deletes the power generation share number sales request information 46d or the power generation share number purchase request information 46e which has matched the trade condition from the memory (step S65).

According to such power station system 1, since a trade of the power generation ownership is also enabled, the purchase of the ownership for the purpose of investment is activated, facilitating a preparation of the construction costs of the power station system 1.

### (Eighth Embodiment)

Next, a power station system 1 according to an eighth embodiment, and a server 4 thereof will be described in detail with reference to the figures. The same structure and same function as those of the first to seventh embodiments will be denoted by the same reference numeral, and the detail description thereof will not be repeated.

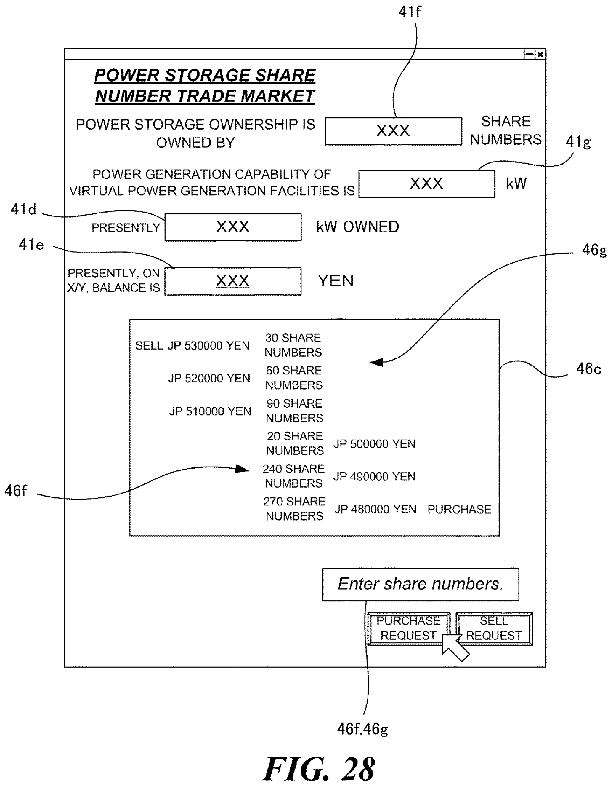

As illustrated in FIG. 28, the information display control unit 45 transmits power storage share number trade information 45c to the computer terminal 11 of the system member which displays a power storage share number trade screen. The power storage share number trade information 45c is a list of power storage share number purchase request information 46f and power storage share number sales request information 46g in a limit order. The power storage share number purchase request information 46f is a purchase request of the power storage share number, and the power storage share number sales request information 46g is a sales request of the power storage share number. The power storage share number trade information 45c is created as, for example, a continuous session in which unit prices are arranged in sequence in the vertical direction in an ascending order, and the purchase share number and the sales share number corresponding to each unit price are arranged side by side to the unit price in the horizontal direction, and is transmitted to the computer terminals 11.

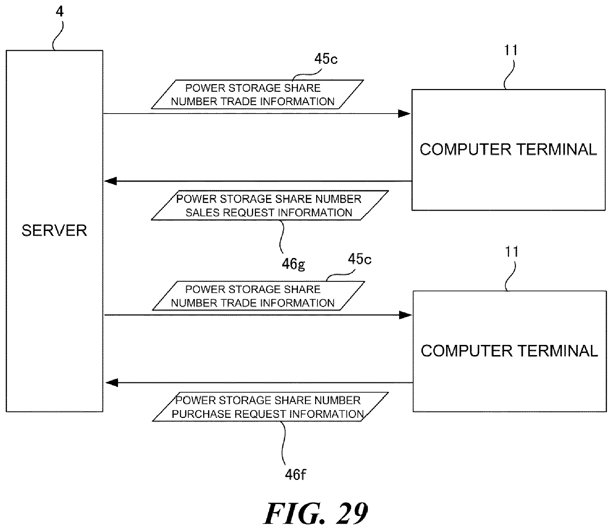

That is, as illustrated in FIG. 29, the trade control unit 46 of this power station system 1 provides a market for the ownership related to the power storage share number, and make the system members to participate. This trade control unit 46 controls the sales and the purchase of the power storage share number by the system members. The trade control unit 46 settles a trade between the power storage share number sales request information 46g that is a set of share-number sales unit price information and the sales number, and the power storage share number purchase request information 46f that is a set of share-number purchase unit price information and the purchase number. As for the power storage share number sales request information 46g and the power storage share number purchase request information 46f, there is also a market order in addition to a limit order, and the market order does not contain the share-number sales unit price information and the share-number purchase unit price information. The trade control unit 46 accepts the sales number with the value indicated by the power storage share number information 41f being the upper limit, and when the sales number exceeds the upper limit, does not accept a request, and determines an error.

The trade control unit 46 settles a trade between the power storage share number purchase request information 46f and the power storage share number sales request information 46g having the share-number sales unit price information and the share-number purchase unit price information consistent with each other. Alternatively, a trade may be settled between a power storage sales request in the market order and the power storage share number purchase request information 46f with the highest share-number purchase unit price information, and between a power storage share number purchase request in the market order and the power storage share number sales request information 46g with the lowest share-number sales unit price information.

The trade amount calculating unit 47 adds the purchase number settled by the power storage share number purchase request information 46f to the power storage share number information 41f of the system member. In addition, the trade amount calculating unit 47 subtracts the sales number settled by the power storage share number sales request information 46g from the power storage share number information 41f of the system member.

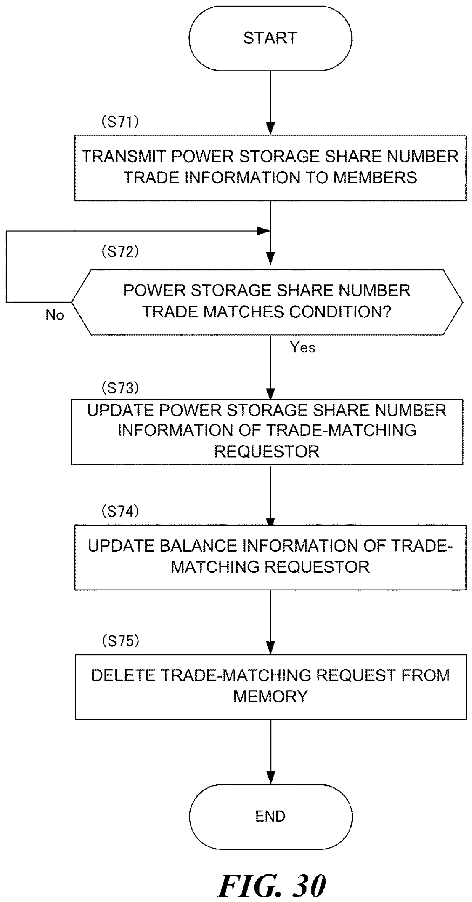

FIG. 30 is a flowchart that illustrates the flow of a trade between the system members by this server 4. First, the information display control unit 45 creates the power storage share number trade information, and periodically transmits the latest information to the computer terminal 11 that is an access source (step S71).

The computer terminal 11 of the system member transmits the power storage share number sales request information 46g or the power storage share number purchase request information 46f to the server 4 via the network 13. The trade control unit 46 determines whether or not a trade can be settled for the power storage share number purchase request information 46f or the power storage share number sales request information 46g received from the computer terminal 11 (step S72). That is, the trade control unit 46 stores of power storage share number purchase request information 46f and power storage share number sales request information 46g, and specifies the power storage share number sales request information 46g and the power storage share number purchase request information 46f that match the trade condition among the power storage share number purchase request information 46f and power storage share number sales request information 46g.

When a determination that the power storage share number purchase request information 46f or the power storage share number sales request information 46g matches the trade condition is made(step S72: YES), the trade amount calculating unit 47 subtracts or adds, from or to the power storage share number information 41f, the sales number or the purchase number contained in the power storage share number purchase request information 46f or the power storage share number sales request information 46g determined as matching the trade condition (step S73). Still further, the balance calculating unit 44 multiplies the share number contained in the power storage share number purchase request information 46f or the power storage share number sales request information 46g determined as matching the trade condition by a contract value, and subtracts or adds the multiplied result from or to the balance information 41e of the seller or the purchaser (step S74). After the steps S73 and S74 complete, the trade control unit 46 deletes the power storage share number purchase request information 46f or the power storage share number sales request information 46g having matched the trade condition (step S75).

According to such power station system 1, since a trade of the ownership of the power storage capacity is also enabled, a purchase of the ownership for the purpose of investment is activated, facilitating a preparation of construction costs of the power station system 1.

### (Other Embodiments)

Several embodiments of the present disclosure have been described in this description, but those embodiments are merely presented as examples, and are not intended to limit the scope of the present disclosure. The above embodiments can be carried out in other various forms, and various omissions, replacements, and modifications can be made thereto without departing from the scope of the present disclosure. Such embodiments and modified forms thereof are within the scope and spirit of the present disclosure, and are also within the scope of the invention as recited in the appended claims and the equivalent range thereto.

For example, although the number of the account of the system member is one, the number of combinations of the power generation facilities 2 and the EMSs 3 may be a plurality of combinations, and the total power generation amounts by the plurality of the power generation facilities 2 may be stored in association with the single account.

### REFERENCE SIGNS LIST

1 Power station system
2 Power generation facilities
2v Virtual power generation facilities
3 EMS
4 Server
41 Membership information memory unit
41a Member identification information
41b Power generation share number information
41c Power generation capability information
41d Owned power amount information
41e Balance information
41f Power storage share number information
41g Power storage capacity information
42 Power-generation-amount calculating unit
43 Power-consumption-amount calculating unit
43a Power-consumption-amount calculating unit
44 Balance calculating unit
45 Information display control unit
45a Power trade information
45b Power generation share number trade information
45c Power storage share number trade information
46 Trade control unit
46a Sales unit price information
46b Sales request information
46c Purchase request information
46d Power generation share number sales request information
46e Power generation share number purchase request information
46f Power storage share number purchase request information
46g Power storage share number sales request information
46h Execution timing information
47 Trade amount calculating unit
48 Power transmission control unit
48a Power sales amount information
5 Energy storage device
5v Virtual energy storage device
6 Communication line
10 Power transmission line
11 Computer terminal
12 Power meter
13 Network

## Claims

1. A server capable of transmitting data to and receiving data from a power station system comprising power generation facilities, and computer terminals of a plurality of members, the server comprising:
a receiving unit receiving power generation amount information of the power generation facilities;
a memory unit storing power generation share number information, owned power generation amount information, and balance information for each member identification information of each of the members;
a power-generation-amount calculating unit adding a power generation distribution amount obtained by proportionally distributing a value of the power generation amount information in accordance with a value of the power generation share number information to a value of the owned power amount information of each of the members;
a trade amount calculating unit subtracting a power sales amount from the owned power amount information;
a balance calculating unit calculating a power sales profit based on a change in the owned power amount information, and adding the power sales profit to the balance information; and
an information display control unit transmitting the owned power amount information of the member and the balance information of the member to the computer terminal.

2. The server according to claim 1, wherein:
the server is connected to a power meter of the member so as to be capable transmitting data thereto and receiving data therefrom,
the server further comprising a power-consumption-amount calculating unit subtracting a value of the power consumption amount information of the member from a value of the owned power amount information of the same member, wherein:
the receiving unit receives the power consumption amount information from the power meter;
the balance calculating unit calculates the power sales profit in cases other than a subtraction based on the power consumption amount information; and
the information display control unit further transmits the power consumption amount to the computer terminal.

3. The server according to claim 1 or 2, wherein:
the power station system comprises an energy storage device; and
the trade amount calculating unit subtracts the power sales from the owned power amount information based on a request from the computer terminal.

4. The server according to claim 3, wherein:
the memory unit further stores power storage share number information for each of the member identification information;
the power-generation-amount calculating unit changes the owned power amount information with a value obtained by multiplying the power storage share number information by a power storage capacity per a share number being an upper limit; and
the balance calculating unit adds the power sales profit that is an excess from the upper limit to the balance information.

5. The server according to any one of claims 1 to 4, further comprising a trade control unit determining a trade condition that matches between sales request information on a power generation share number and purchase request information thereon, wherein:
the receiving unit receives the sales request information on the power generation share number and the purchase request information thereon from the computer terminal of the member;
the trade amount calculating unit subtracts a value indicated by the sales request information determined as matching the trade condition from the power storage share number information of a seller, and adds a value indicated by the purchase request information determined as matching the trade condition to the power storage share number information of a purchaser; and
the balance calculating unit increases a value of the balance information of the seller based on the sales request information determined as matching the trade condition, and decreases a value of the balance information of the purchaser based on the purchase request information determined as matching the trade condition.

6. The server according to claim 4, further comprising a trade control unit determining a trade condition that matches between sales request information on a power storage share number and purchase request information thereon, wherein:
the receiving unit receives the sales request information on the power storage share number and the purchase request information thereon from the computer terminal of the member;
the trade amount calculating unit subtracts a value indicated by the sales request information determined as matching the trade condition from the power storage share number information of a seller, and adds a value indicated by the purchase request information determined as matching the trade condition to the power storage share number information of a purchaser; and
the balance calculating unit increases a value of the balance information of the seller based on the sales request information determined as matching the trade condition, and decreases a value of the balance information of the purchaser based on the purchase request information determined as matching the trade condition.

7. The server according to any one of claims 1 to 4, further comprising:
a trade control unit determining a trade condition that matches between sales request information of the power amount and purchase request information thereon; and
a power transmission control unit instructing an actual power sales amount to the system based on the purchase request information determined as matching the trade condition, wherein:
the receiving unit receives the purchase request information of the power amount from an external side of the system, and receives the sales request information of the power amount from the computer terminal of the member;
the trade amount calculating unit subtracts a value indicated by the sales request information determined as matching the trade condition from the owned power amount information of a seller; and
the balance calculating unit increases a value of the balance information of the seller based on the sales request information determined as matching the trade condition.

8. The server according to claim 7, wherein:
the receiving unit receives the purchase request information of the power amount from the computer terminal of the member;
the trade amount calculating unit adds a value indicated by the purchase request information of the member determined as matching the trade condition to the owned power amount information of a purchaser; and
the balance calculating unit decreases a value of the balance information of the purchaser based on the purchase request information of the member determined as matching the trade condition.

9. The server according to any one of claims 5 to 8, wherein:
the purchase request information and the sales request information both in a limit order contain a purchase amount or a sales amount, and a unit price;
the purchase request information and the sales request information both in a market order contain a purchase amount or a sales amount;
the trade control unit determines the trade condition matching between the requests having the unit price consistent with each other, between the sales request in the market order and the purchase request with a highest unit price, and between the purchase request in the market order and the sales request with a lowest unit price.

10. The server according to claim 9, wherein:
the purchase request information and the sales request information each contain execution timing information; and
the trade control unit determines as the trade condition matching between the request further having the execution timing information consistent with each other.

11. The server according to claim 10, wherein the power transmission control unit transmits, to the system, a power transmission amount to an external side of the system and the execution timing information.

12. The server according to any one of claims 1 to 11, wherein:
the power-generation-amount calculating unit proportionally distributes a positive remaining value obtained by subtracting the power transmission amount to the external side of the system from a lower limit value of the power transmission amount or an instructed value thereof in accordance with a value of the power generation share number information, and subtracts a distribution value from the owned power amount information; and
the balance calculating unit adds a power sales profit based on the distribution value to the balance information.

13. The server according to claim 7 or 8, wherein the trade control unit stops the determination of the trade condition matching when a power transmission amount to an external side of the system exceeds an upper limit value of the power transmission amount or a limiter value set based on an instructed value.

14. The server according to any one of claims 5 to 9, wherein the information display control unit further transmits a list of a purchase amount of a purchase request and a sales amount of a sales request arranged unit price by unit price to the computer terminal of the member.

15. A power station system connected to computer terminals of a plurality of members so as to be capable of transmitting data to and receiving data from the computer terminal, and comprising power generation facilities, the power station system further comprising:
a receiving unit receiving power generation amount information of the power generation facilities;
a memory unit storing power generation share number information, owned power amount information, and balance information for each member identification information of each of the members;
a power-generation-amount calculating unit adding a power generation distribution amount obtained by proportionally distributing a value of the power generation amount information in accordance with a value of the power generation share number information to a value of the owned power amount information of each of the members;
a trade amount calculating unit subtracting a power sales amount from the owned power amount information;
a balance calculating unit calculating a power sales profit based on a change in the owned power amount information, and adding the power sales profit to the balance information; and
an information display control unit transmitting the owned power amount information of the member and the balance information of the member to the computer terminal.
